Europäisches Patentamt

(19) European Patent Office

Office européen des brevets

(11) Publication number: **0 158 485**
**A2**

## (12) EUROPEAN PATENT APPLICATION

(21) Application number: **85302157.4**

(22) Date of filing: **28.03.85**

(51) Int. Cl.⁴: **B 05 B 17/06**
**B 01 J 35/08, F 23 D 11/10**
**F 23 C 1/00, G 01 N 15/02**
**B 01 J 2/08**

(30) Priority: **05.04.84 US 596990**

(43) Date of publication of application:
**16.10.85 Bulletin 85/42**

(84) Designated Contracting States:
**BE DE FR GB IT NL SE**

(71) Applicant: **MOBIL OIL CORPORATION**
**150 East 42nd Street**
**New York New York 10017(US)**

(72) Inventor: **Green, Gary James**
**319 Emerald Drive**
**Yardley Pennsylvania 19067(US)**

(72) Inventor: **Walsh, Dennis Robert**
**36 Redwood Drive**
**Richwood Pennsylvania 18954(US)**

(72) Inventor: **Dryer, Frederick Lewis**
**106 Weldon Way**
**Pennington New Jersey 08534(US)**

(72) Inventor: **Schwartz, Albert B.**
**1901 John F. Kennedy Boulevard Apartment 1204**
**Philadelphia Pennsylvania 19103(US)**

(74) Representative: **West, Alan Harry**
**Mobil Court 3 Clements Inn**
**London WC2A 2EB(GB)**

(54) Droplet generating apparatus.

(57) Uniform droplets of a liquid are produced by positioning the end of a capillary tube in the throat of a venturi. Gas flowing through the venturi detaches droplets from the end of the capillary tube without producing high volume gas flow or high velocity of the droplets. Fuel oil droplets can be formed. The method can be used to form spheroidal catalysts.

FIG. I

F-2697                                        -1-

## DROPLET GENERATING APPARATUS

This invention relates to the generation of small, widely spaced droplets of uniform size and more particularly, to the generation of such droplets by placing the end of a capillary tube in a venturi throat.

A need exists in the laboratory and in other scientific analyses for the production of a stream of uniform, isolated droplets of liquid. Several techniques are currently used for producing streams of small uniform droplets suitable for applications such as injection into laboratory combustion devices. See, for example, J.J. Sangiovanni and A. S. Kestin, Combustion Science and Technology 16, 59 (1977); J. C. Lasheras, A.C. Fernandez-Pello, and F. L. Dryer, Combustion Science and Technology 21, 1 (1979); C. H. Wang, X. Q. Liu and C. K. Law, Paper No. 82-81, Fall Western States Meeting, The Combustion Institute, Sandia Laboratories, Livermore, CA October 11-12, 1982. Streams of small, uniformly-sized droplets are also required, for example, in testing aerosol standards for environmental toxicological studies, ink jet printing methods, new nebulization techniques for flame atomic absorption spectroscopy, novel means for investigating fast chemical reaction kinetics, and new approaches to studying the comubstion behavior of fuels.

The prior art includes Rayleigh instability and mechanical chopping techniques of producing droplets which rely on physically breaking up an established high velocity liquid jet by electromagnetically induced mechanical vibrations or high speed rotary shuttering, respectively. Piezoelectric techniques can be used to expel droplets by mechanical constrictions applied to a liquid reservoir. The use of moving parts or electronic components for the production of droplets gives rise to the possibility of component failure, or drift, which adversely affects repeatability with time.

**0158485**

A major restriction to the use of Rayleigh instability for exploring isolated droplet combustion is the limited droplet spacing inherently available. However, no alternative droplet generation techniques (e.g., mechanical chopping or piezoelectric techniques) producing well-spaced (30 droplet diameters) droplets have been described which prove are adaptable for use in combustion apparatus without introducing significant experimental complexities. J. A. Bolt and M. A. Saad, "Combustion Rates of Freely Falling Fuel Droplets in a Hot Atmosphere", Sixth Symposium (International) on Combustion, p 717, The Combustion Institute, 1957 describes apparatus for forming fuel droplets by a small bore tube from which the drops are thrown by a concentric jet of air. Droplet size is controlled by capillary bore size, pressure of the concentric air head, head of the fuel and the distance the capillary protrudes beyond the air nozzle. In order to induce droplet detachment, the concentric jet of air must have a high velocity as it passes the capillary tip. The large volume of air which this requires is not consistent with study of the combustion characteristics of the fuel in the droplet. In such studies, it is not desirable that the droplets be transported through the furnace in a high volume, high velocity stream of air or gas. Further, a high velocity flow of air produces high velocity droplets which detract from the study of the droplets.

None of the prior art methods of generating droplets could produce uniform droplets of controlled, substantially smaller size in which the droplet spacing, and initial velocity can be regulated. We found a way to achieve this.

Accordingly, the present invention provides an apparatus for producing uniform droplets of a liquid comprising a capillary tube having a liquid receiving end and an open tip; means for supplying and controlling the flow of liquid to said receiving end; an outer concentric tube having a venturi at the bottom thereof, the tip of the capillary tube being positioned in the throat of the venturi; a source of venturi fluid supplied to the outer tube; and means for regulating the flow of venturi fluid to control the formation of droplets from the tip of the capillary tube.

In another embodiment, the present invention provides a method of producing uniform droplets of a liquid comprising supplying said liquid to a capillary tube; detaching droplets from the other end of said capillary tube by flowing gas through a venturi throat in which the other end of said capillary tube is positioned.

In yet another embodiment, the present invention provides a method of producing uniform spheroidal catalyst beads from a catalyst forming liquid comprising supplying said liquid to a capillary tube; supplying a fluid which flows through a venturi throat in which the other end of said capillary tube is positioned; detaching droplets of said liquid from the other end of said capillary tube by said flow of said fluid; and hardening said droplets into uniform spheriodal catalyst beads.

Figure 1 shows the droplet producing apparatus of the present invention in a system for measuring the combustion of fuel;

Figure 2 shows the droplet generation device of the present invention;

Figure 3 shows droplet diameter versus nitrogen flow in an exemplary practice of the invention;

Figure 4 shows spacing versus nitrogen flow in an exemplary practice of the invention;

Figure 5 shows droplet spacing versus nitrogen flow in an exemplary practice of the invention;

Figure 6 shows droplet frequency versus nitrogen flow; and

Figure 7 shows initial droplet velocity versus nitrogen flow in an exemplary practice of the invention.

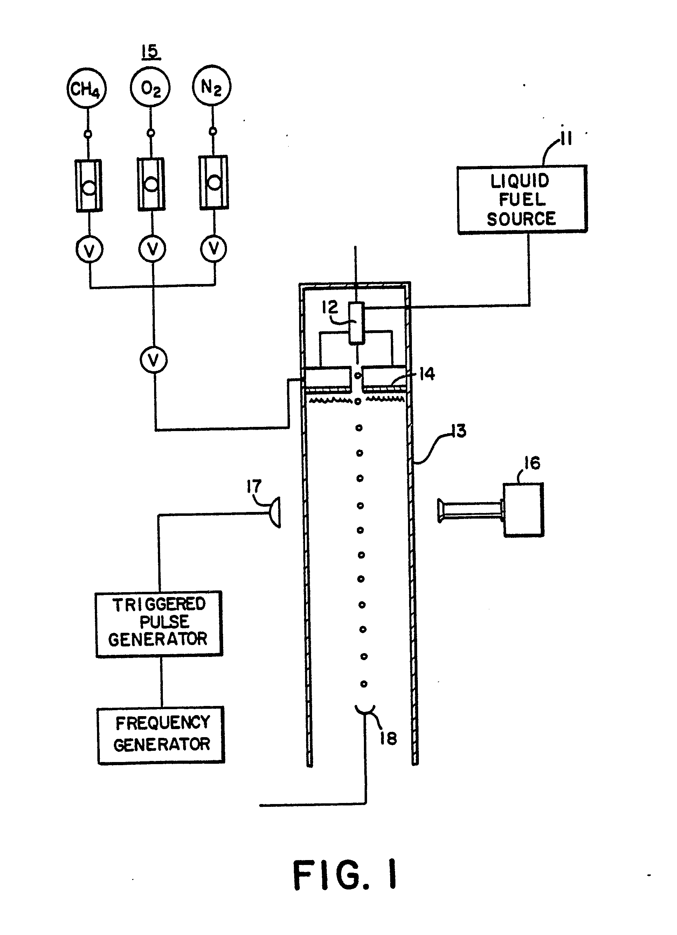

Figure 1 depicts a source of liquid fuel 11 to be tested. The liquid fuel is supplied to the droplet generation device 12 of the present invention.

Droplets are produced in the combustion duct 13 which has a flat flame burner 14 supplied with fuel, oxygen and nitrogen from the sources shown at 15.

Optical detection of the combustion process is performed by a detector 16 such as a camera1 or optical probe, and a triggered light source 17. The residue of the combustion process is collected in sample collection probe 18.

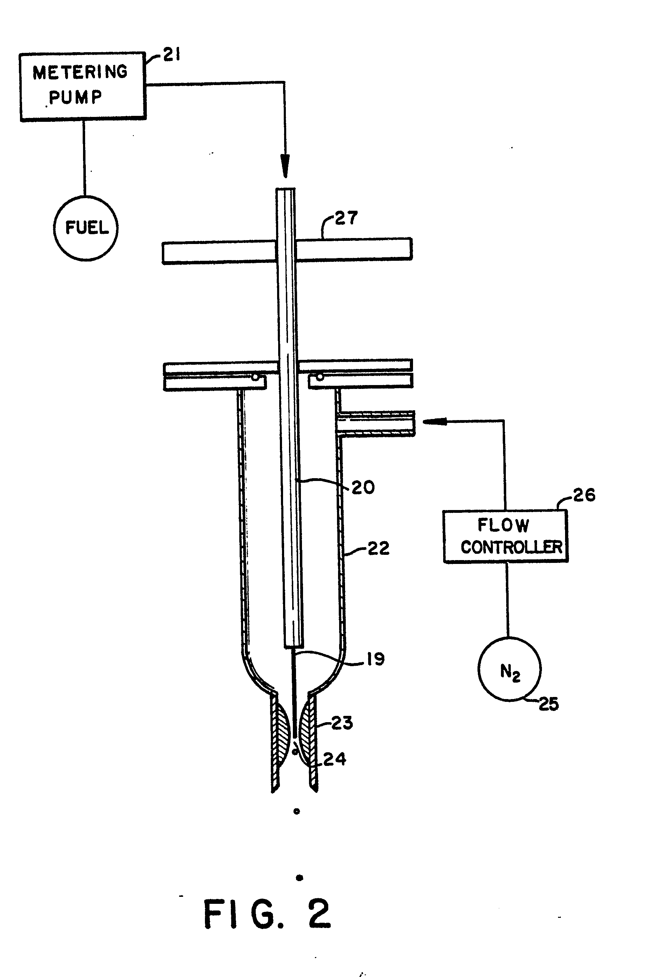

Referring to Figure 2, the droplet generation device of the present invention includes a capillary tube 19 having a liquid receiving end which is connected to the tube 20 which contains fuel from the metering pump 21. An outer concentric tube 22 has a venturi 23 at the bottom thereof. The tip of capillary tube 19 is positioned in the throat 24 of the venturi 23.

Venturi 23 is a converging-diverging nozzle with the diverging nozzle section having a half angle of $7.5^{o}$ in an exemplary embodiment. The converging-diverging nozzle insures a better trajectory of the droplets than other venturis.

Nitrogen gas from source 25 is supplied through flow controller 26 which regulates the flow of gas through the venturi to control the formation of droplets from the tip of the capillary tube. By varying the liquid flow, gas, flow, and capillary size, the droplet size, spacing, frequency and initial velocity may be precisely controlled.

A stream of droplets is produced by inducing premature detachment of incompletely formed droplets at the tip of the capillary 19. This detachment is accomplished by drag caused by the annular flow of gas past the capillary tip which is positioned in the throat 23 of the venturi. The gas is accelerated past the tip of the capillary by the venturi and then decelerated upon exit from the throat of venturi 23. Droplets thus formed are much smaller in diameter than those that would result from natural detachment due to the weight of droplet overcoming the interfacial tension at the capillary tip.

Precise metering of the liquid flow is controlled by the metering pump 21 and flow controller 26 accurately controls gas flow.

Accurate positioning of the capillary tip with respect to the venturi is accomplished with a micrometer driven translation stage 27.  In an exemplary embodiment of the invention, a 102 microns (32-gauge, 0.004 inches inside diameter) stainlesss steel capillary was positioned in the throat of a venturi of approximately 1 mm inside diameter.

The relationship between the size of the venturi throat and the diameter of the capillary tube will depend on the type of droplets to be produced.  For the testing of fuels as described herein, the capillary tube 19 has an inside diameter of 25 to 889 microns (0.001 to 0.035 inches) and outside diameter of 127 to 1270 microns (0.005 to 0.05 inches).  The outer concentric tube 22 has an inside diameter of 0.25 to 5 mm (0.1 to 2 inches) and the throat of the venturi 23 has an inside diameter of 254 to 1905 microns (0.01 to 0.075 inches) and a throat length of 762 to 7620 microns (0.03 to 0.3 inches).

Droplet characterization was carried out by a helium-neon laser aligned to intersect the path of the droplet stream. Scattered laser light from the droplets passing through the beam was detected with a photodiode miniprobe.  Resultant modulated photodiode output signal was monitored with an oscilloscope to yield directly the droplet frequency, i.e., the rate of droplet production.  The output signal was also supplied to a strobe lamp used to synchronously back illuminate the droplet stream for visual observation and photography to accurately measure droplet size and spacing.

        The appearance of a hexadecane droplet emerging from
the tip of the device was spherical and relatively well centered
with respect to the tip.  The extent of droplet spacing available
with the present invention was shown by droplets spaced by 100
droplet diameters, a spacing 20-50 times greater than that obtained
via Rayleigh instability techniques.  The relationships between
droplet size, spacing, and frequency associated with the current
technique are distinctly different from those observed with the
Rayleigh instability technique.

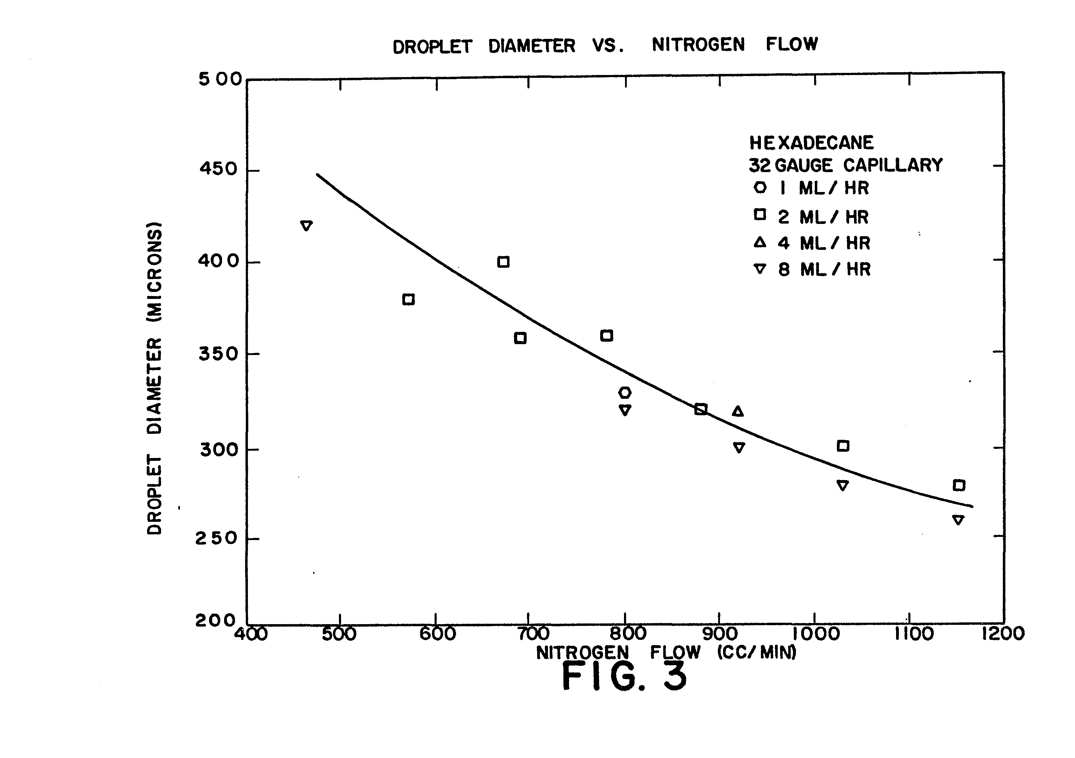

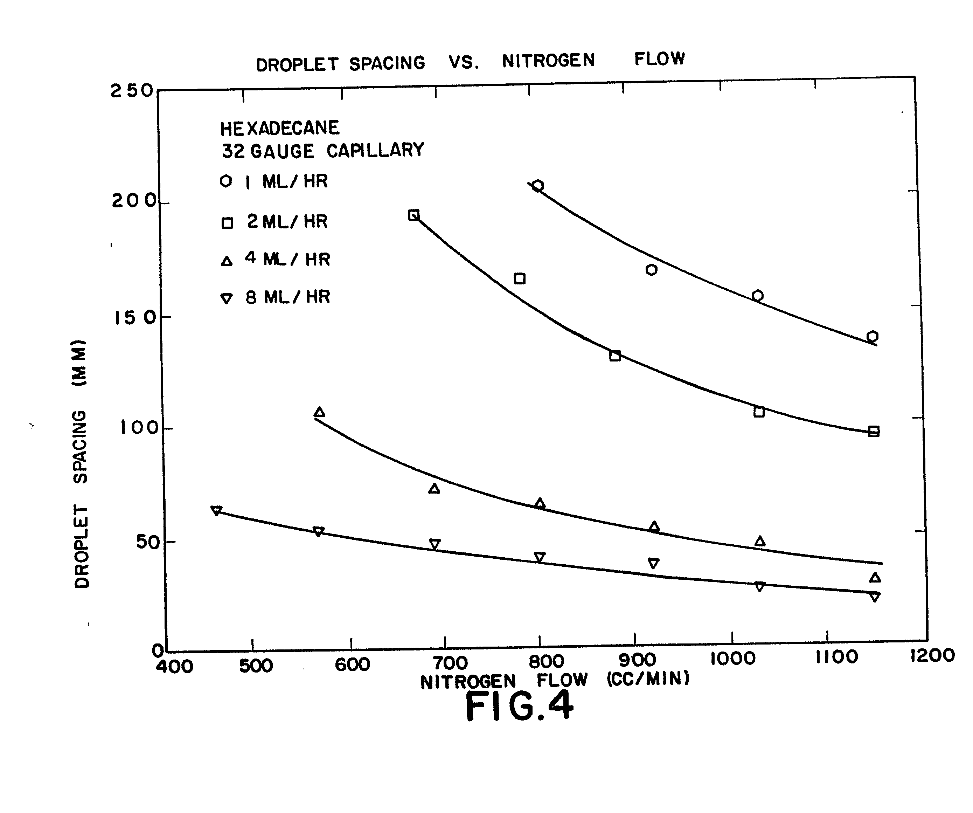

        By observing droplet diameter and spacing for a variety of
liquid and gas flow rates, the results depicted in Figures 3, 4, and
5 were obtained.

        Figure 3 shows droplet size of hexadecane fed through a 32
gauge capillary tube in the throat of a venturi of 1 mm inside
diameter.  Droplet diameter, in microns, is plotted against nitrogen
flow, measured in cc/min.  Hexadecane flow was varied from 1, 2, 4,
and 8 ml/hr.

        Figure 3 shows that droplet diameter decreases with
increasing nitrogen flow past the capillary tip, relatively
independently of of the liquid flow rate through the capillary.

        Figure 4 shows that inter-drop spacing also decreases with
increased nitrogen flow.  The magnitude of the spacing, however,
clearly depends on the rate of liquid flow through the capillary.
For a given nitrogen flow, the droplet spacing decreases with
increasing liquid flow.

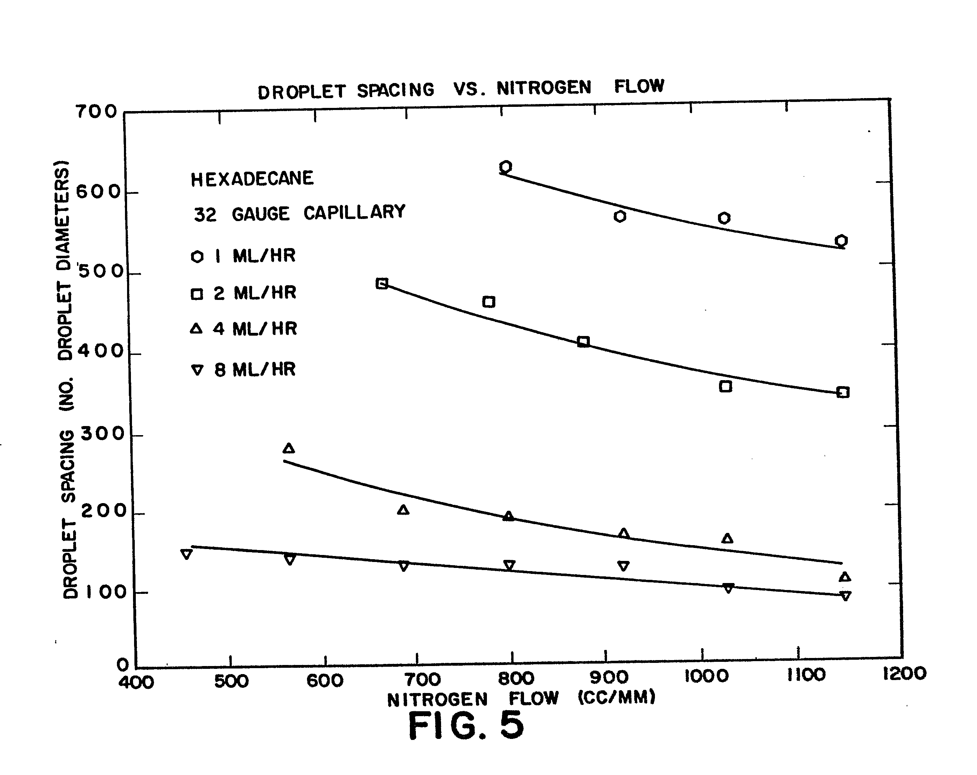

        Figure 5 presents the droplet spacing data shown in Figure
4 in terms of numbers of droplet diameters separating individual
droplets.  It is evident that droplet spacings from 100 to 600
droplet diameters may be achieved by simply varying the flow
conditions across the ranges indicated in the figure.

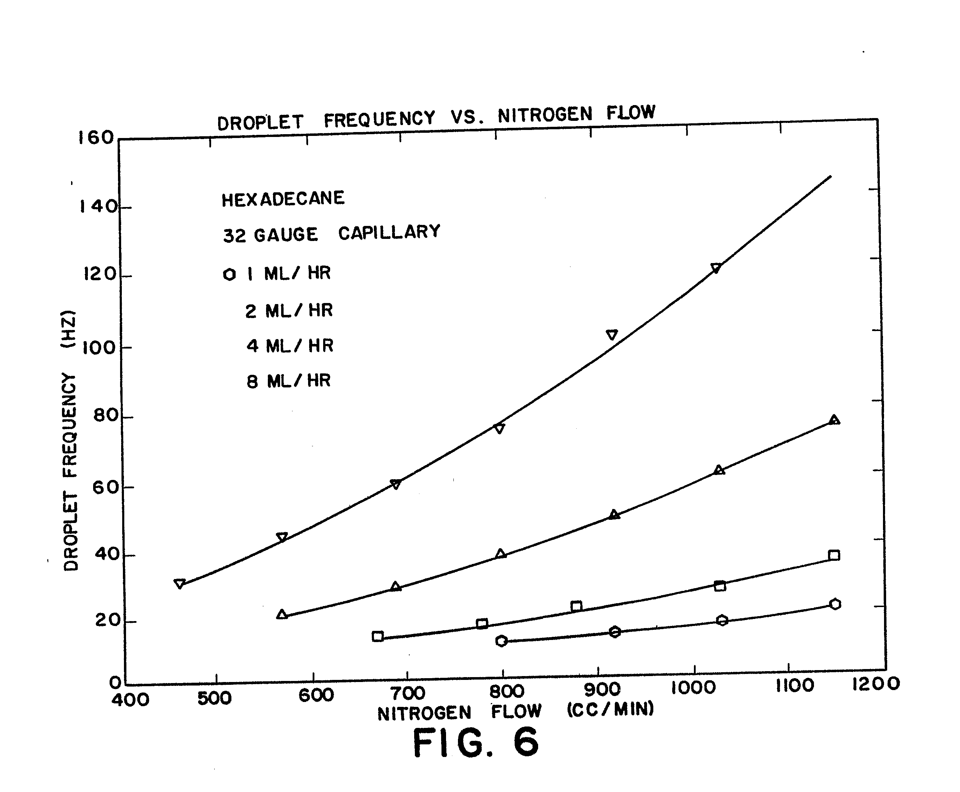

        The frequency of production of the resultant droplets as a
function of operating parameters is illustrated in Figure 6.

Droplet frequency increases with increasing nitrogen flow and also increases with increasing liquid flow. The relatively low frequencies of 10-150 Hz produced in the invention should be contrasted to the 500-2000 Hz production rates observed in previous work on the Rayleigh instability technique. The low droplet production rates coupled with the latively low liquid flow rates ( 10 ml/hr) in the current device offer the advantage of greatly reduced liquid requirements compared to the Rayleigh instability technique which required 200-400 ml/hr liquid flow.

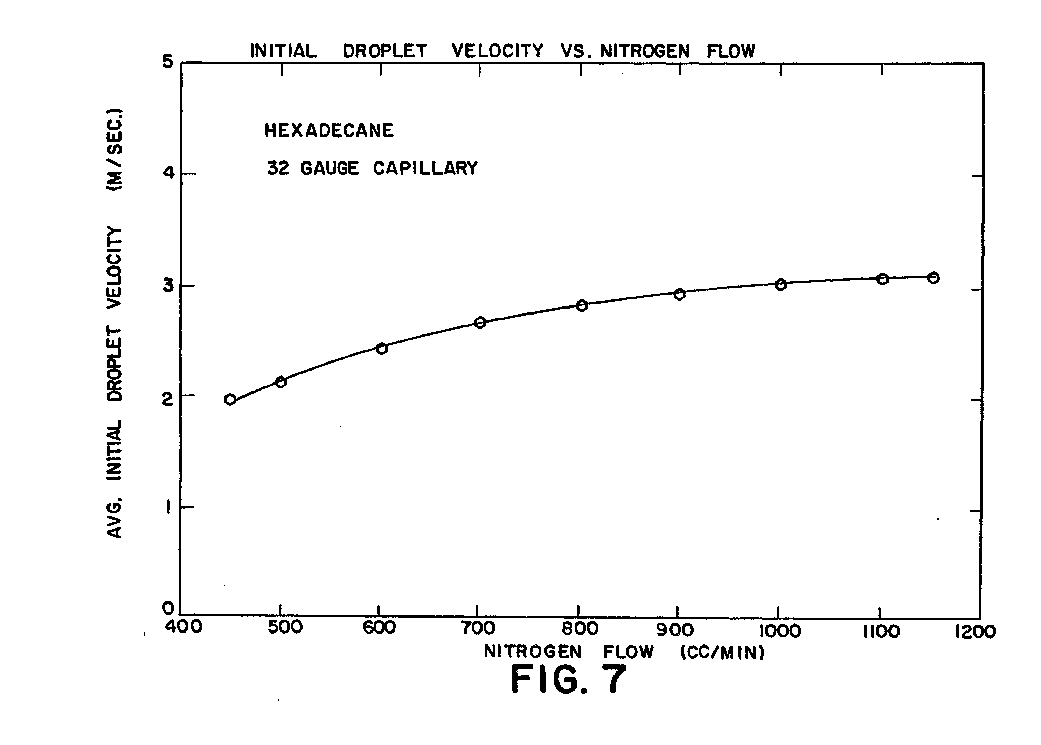

The initial velocity of droplets produced was also determined as a function of liquid and nitrogen flow by multiplying the initial droplet spacing by the droplet frequency. The collective results are plotted as a single curve in Figure 7 and show that the initial droplet velocity has a mild dependence on nitrogen flow, gradually increasing with increasing flow. There is no clear dependence on liquid flow rate from the present data. Average initial droplet velocities are 2-3 m/s, comparable to those obtained with the Rayleigh instability technique and suitable for low Reynolds number studies of isolated droplet combustion in the current droplet combustion device. Studies with light No. 6 marine fuel have shown nominally the same behavior in terms of droplet size, spacing, frequency and velocity.

CATALYST MANUFACTURE

The droplet generating apparatus of the present invention, besides making droplets of liquid fuel to be burned, can also be used to make droplets of a liquid catalyst precursor.

In this variation, a catalyst precursor, such as alumina sol with a conventional gelling agent, would be used as the liquid feed to the capillary. The fluid flowing through the throat of the venturi, and around the capillary, would be oil, an aqueous solution, or even a vapor - anything that would support the alumina sol droplet until it gelled.

Catalysts produced using this method would have a very uniform spherical size, not easily achievable by other methods.

It has long been known to prepare catalyst supports, especially spheroidal alumina particles, by the well-known oil-drop method, described by Hoekstra in U.S. Patent No. 2,620,314. Briefly, the method comprises commingling an acidic alumina hydrosol with a gelling agent characterized as a weak base which hydrolyzes to ammonia with increasing temperature, and dispersing the mixtures as droplets in a hot oil bath generally contained in a vertical column or forming tower. The forming oil is typically a light or heavy gas oil chosen principally for its high interfacial tension with respect to water. Thus, as each droplet penetrates the oil surface, it draws into a spherical shape. The droplets are principally water at this stage and, being insoluble in the oil, they tend to assume a shape having the least surface area for its volume. A second effect is that the formed hydrosol droplets gravitating to the bottom of the forming oil are progressively gelled to a stage sufficient to maintain the structural integrity of the resulting hydrogel spheres during the subsequent processing thereof. In any case, the formed hydrogel spheres are subsequently aged, usually in the hot forming oil and thereafter washed, dried and calcined, usually in an oxidizing atmosphere at 425° to 750°C.

The above-described method basically uses an internal gelling agent, such as hexamethylenetetramine, that is added to the feed before drop formation and that releases ammonia in the hot oil bath. U.S. Patent No. 3,558,508 to Keith et al. describes an oil-drop method employing an external gelation technique in which gaseous ammonia is introduced into the bottom of a column containing the water-immiscible liquid and coagulates the droplets by contacting their external surfaces. The Keith et al. process is based to a considerable extent on the use of specific alumina feed prepared by acidic hydrolysis of finely divided aluminum.

Spherical alumina particles may also be formed by the hydrocarbon/ammonia process described in Olechowska et al., "Preparation of Spherically Shaped Alumina Oxide", INTERNATIONAL CHEMICAL ENGINEERING, Volume 14, No. 1, pages 90-93, January, 1974. In this process, droplets of a slurry of nitric acid and dehydrated aluminum hydroxide fall through air into a column containing hydrocarbon and ammonia phases. The droplets assume spheroidal shapes in passing through the water-immiscible liquid and then are coagulated to firm spheroidal beads or pellets in the coagulating medium. Similar processes utilizing pseudosol feeds and hydrochloric acid are described in:

1. Katsobushvili et al., "Formation of Spherical Alumina and Aluminum Oxide Catalysts by the Hydrocarbon-Ammonia Process--1. The Role of Electrolytes in the Formation Process", KOLLOINDNYI ZHURNAL. Vol. 28, No. 1, pp. 46-50, January-February, 1966;

2. Katsobashvili et al, "Preparation of Mechanically Strong Alumina and Aluminum Oxide Catalysts in the Form of Spherical Granules by the Hydrocarbon-Ammonia Forming Method", ZHURNAL PRIKLADNOI KHIMII, Vol. 39, No. 11, pp. 2424-2429, November, 1966; and

3. Katsobashvili et al., "Formation of Spherical Alumina and Aluminum Oxide Catalysts by the Hydrocarbon-Ammonia Process-Coagulational Structure Formation During the Forming Process", KOLLOIDNYI ZHURNAL, Vol. 29, No. 4 pp. 503-508, July-August, 1967.

The process of the present invention offers several advantages over the prior art oil-dropping methods, both internal and external gelling systems.

One advantage is that the droplets formed by our process are spherical, and tend to remain spherical within the immediate proximity of the droplet generating apparatus. This is in contrast to the prior art methods which form a lens-shaped catalyst particle, which then assumes the shape of a sphere in the hot oil bath due to forces to surface tension.

Subsequent aging of the catalyst droplets in an aqueous bath may lead to stress cracks or fractures, because of different salt concentrations in the bath. The problems of stress cracks or fractures due to salt concentration gradients, and one method solution of these problems, is disclosed in 4,250,058.

Whenever catalysts are transferred from an oil phase to an aqueous phase, there is an interface which tends to accumulate any dirt which may be present in the system and hold up some particles of catalyst.

It is possible to minimize the problems of getting catalyst particles through the interface by adding a surfactant or detergent to the water phase, but this represents added cost and added complications.

In contrast, the process of the present invention does not tend to distort the liquid droplets into a lens shape. The droplet generating apparatus can be run horizontally, pointing up or pointing down, or any intermediate position.

As applied to catalyst manufacture, an internal gelling agent can be used, activated by hot air or other hot vapor, rather than hot oil.

In one embodiment, the droplet generating apparatus can be operated pointing upwards, discharging droplets of alumina sol plus a gelling agent up through the throat of a venturi through which flows air or other gas at a temperature of 100-1,000°C or even higher.

Spheres are formed and carried upward at an initial velocity of 2-3 m/s, for a vertical travel of 2-20 meters, or more, depending upon the amount of time required to obtain a minimal amount of gelation and lock in the spherical shape. At the top of the catalyst particles' travel, the partially gelled catalyst may be deflected either mechanically, or preferably with a jet of a vapor or liquid, into a conventional hot oil bath or an aqueous ammoniacal aging bath. By proper selection of operating variables, it is possible to eliminate entirely the conventional oil bath, and its attendant problems, and go directly from the droplet forming apparatus into a conventional aqueous aging solution.

It is also possible to simply substitute the droplet forming apparatus of the present invention for the droplet forming device used in conventional hot oil forming methods.


CATALYST PRECURSORS

Any of the conventional materials used to form catalyst may be used in the process of the present invention. The invention is not a new catalyst starting material, but a better way to convert known catalyst precursors into catalyst.

When alumina is the desired catalyst support, an alumina source and a gelling agent must be used. Preferably, an acidic alumina hydrosol is the alumina source. This can be prepared by the hydrolysis of an alumina salt in aqueous solution. It is possible to start with aluminum pellets, and digest these in a suitable acid, such as hydrochloric acid, to form an alumina salt.

It is also possible to start with dried alumina powders or washed alumina filter cake.

Any conventional gelling agent or system, whether internal or external, may be used. Suitable internal gelling agents include hexamethylenetetramine, hexamethylenediamine, and other conventional internal gelling agents.

Suitable external gelling agents include ammonia, or aqueous ammoniacal solutions, etc. Hot air containing a gelling agent in vapor form (amonia) or a mist of an amine gelling agent may be used.

The fluid flowing through the venturi may be either a vapor or liquid. Use of hot oil as a fluid to form catalyst spheres work well, because of the surface tension effects discussed in conjunction with the oil droppig method. Any relatively immiscible fluid may be used.

Either all internal, or all external, or a combination of internal and external gelling may be used in the process of the present invention for forming catalyst spheres.

Although the above discussion has been directed towards alumina catalyst, the same general techniques may be used whenever a liquid phase or pumpable slurry of a catalyst precursor is formed into a sphere using the process and apparatus of the present invention. Other well-known catalysts support materials include silica sol, mixtures of silica and alumina, and other similar materials.

## CATALYST PRECURSOR LIQUID PROPERTIES

Regardless of the particular catalyst precursor chosen, and regardless of the metals or other additives added to the catalyst precursor, the liquid catalyst precursor must satisfy a number of constraints.

It must be either a liquid or solid/liquid slurry which is pumpable.

The viscosity of the catalyst precursor solution may be any viscosity which has been found suitable for use in prior art catalyst forming processes, although somewhat greater latitude in viscosity is permissible because the process of the present invention does a better job of forming spheres than the prior art processes. Accordingly, viscosities may range from materials with a viscosity approaching that of water, a centipoise of one, up to materials which are just barely pumpable. Expressed as centipoise, the viscosity may range from 1 to perhaps as much as 2,000 centipoise, although viscosities this high are difficult to pump. The preferred viscosities range from about 20 to 1600 cps, although viscosities ranging between 20 and 300 cps most closely approximate those used in conventional catalyst forming processes and are preferred for use herein.

## CATALYST ADDITIVES

The catalyst precursor materials discussed above form, e.g., alumina, which is usually used as a support for other catalytic components. These other catalytic components may range from hydrogenation/dehydrogenation components to crystalline additive materials.

Conventional catalytic elements which may be added include metals or compounds thereof of the periodic table.

When the catalyst is destined for use in catalytic converters in automobiles, the catalytic elements would usually be platinum, palladium, or rhodium compounds mixed in with the alumina sol, or other support.

When the catalyst is destined for use in hydrotreating units, the catalytic elements may be one or more of the conventional hydrogenation/dehydrogenation promoters, e.g., cobalt, molybdenum, tungsten, nickel-moly, cobalt-moly, etc.

Other catalytic additives which may be added include various crystalline materials.

These may be large pore materials, such as zeolite X, zeolite Y, and mordenite or intermediate pore size materials having a constraint index of 1-12, e.g., ZSM-5, ZSM-11, or relatively small pore size materials such as erionite.

For many processes, the shape selective zeolites are the preferred catalyst additives. Typical of such processes is catalytic hydrodewaxing of fuel oils and lubricating oil stocks. Because of the importance of the shape selective zeolite additives, because the definition of shape selectivity depends upon constraint index, more details will be given about this term and about various shape selective zeolites.

The "constraint index" is calculated as follows:

Constraint Index =

$$\frac{\log_{10}(\text{fraction of a n-hexane remaining})}{\log_{10}(\text{fraction of 3-methylpentane remaining})}$$

The constraint index approximates the ratio of the cracking rate constants for the two hydrocarbons. Shape selective zeolites are those having a constraint index in the approximate range of 1 to 12. The constraint index of various zeolites is reported hereafter.

| ZEOLITES | C.I. |
|---|---|
| ZSM-5 | 8.3 |
| ZSM-11 | 8.7 |
| ZSM-12 | 2 |
| ZSM-38 | 2 |
| ZSM-35 | 4.5 |
| TMA Offretite | 3.7 |
| Beta | 0.6 |
| ZSM-14 | 0.5 |
| H-Zeolon | 0.4 |
| REY | 0.4 |
| Amorphous Silica-Alumina | 0.6 |
| Erionite | 38 |

It is to be realized that the above constraint index values typically characterized the specified zeolites but that such are the cumulative result of several variables used in determination and calculation thereof. Thus, for a given zeolite depending on the temperatures employed, usually 275 to 525°C, with accompanying conversion between 10% to 60%, the constraint index may vary within the indicated approximate range of 1 to 12. Likewise, other variables such as the crystal size of the zeolite, the presence of possible occluded contaminants and binders intimately combined with the zeolite may affect the constraint index. The constraint index is approximate.

While the above experimental procedure will enable one to achieve the desired overall conversion of 10% to 60% for the most catalyst samples and represents preferred conditions, it may occasionally be necessary to use somewhat more severe conditions for samples of very low activity, such as those having a very high silica to alumina ratio of high sodium content. In those instances, temperatures above 540°C, a liquid hourly space velocity of less than one, such as 0.1 or less, can be employed in order to achieve a minimum total conversion of about 10%.

Shape selective zeolites defined herein are exemplified by ZSM-5, ZSM-11, ZSM-12, ZSM-35, ZSM-38 and other similar materials.

U.S. Patent No. 3,702,886 describes ZSM-5.

ZSM-11 is described in U.S. Patent No. 3,709,979.

ZSM-12 is described in U.S. Patent No. 3,832,449.

ZSM-35 is described in U.S. Patent No. 4,016,245.

ZSM-38 is described in U.S. Patent No. 4,046,859.

The crystalline additive materials discussed above may also contain one or more metallic components. These may be added by coventional techniques, such as ion exchange or impregnation, or the metallic components and crystalline additives may be added to the catalyst precursor before drop formation.

## CATALYST EXPERIMENTS

Experiments were conducted with a heavy fuel oil containing coke. This material had the viscosity of many catalyst forming solutions and showed that this method could be used to form catalyst spheres.

F-2697 -16- **0158485**

<u>CLAIMS</u>:

1. Apparatus for producing uniform droplets of a liquid comprising:

a capillary tube having a liquid receiving end and an open tip;

means for supplying and controlling the flow of liquid to said receiving end;

an outer concentric tube having a venturi at the bottom thereof, the tip of the capillary tube being positioned in the throat of the venturi;

a source of venturi fluid supplied to the outer tube; and

means for regulating the flow of venturi fluid to control the formation of droplets from the tip of the capillary tube.

2. The apparatus of claim 1 wherein the venturi is a converging-diverging nozzle.

3. The apparatus of claim 1 or 2 wherein the means for supplying liquid comprises a metering pump.

4. The apparatus of any of claims 1 to 3 wherein the capillary tube has an inside diameter of 25 to 889 microns (0.001 to 0.035 inches), an outside diameter of 127 to 1270 microns (0.005 to 0.05 inches). The outer concentric tube has an inside diameter of .25 to 5.0 mm (0.1 to 2.0 inches) and the throat of the venturi has an inside diameter of 254 to 1905 microns (0.01 to 0.075 inches) and a throat length of 762 to 7620 microns (0.03 to 0.3 inches).

5. The apparatus of any of claims 1 to 4 wherein said fluid is nitrogen.

F-2697 -17-

6. The apparatus of any of claims 1 to 5 in a system for measuring the combustion of liquid fuel comprising:

a combustion duct;

a burner in said duct, said apparatus for producing uniform droplets being positioned at the top of said burner to form a stream of droplets which pass through said burner and said combustion duct.

7. The system and apparatus of claim 6 further comprising:

an optical detection system for recording the optical characteristics of the combustion of said stream of droplets.

8. A method of producing uniform droplets of a liquid comprising:

supplying said liquid to a capillary tube;

detaching droplets from the other end of said capillary tube by flowing a fluid through a venturi throat in which the other end of said capillary tube is positioned.

9. The method of claim 8 further comprising:

regulating the flow of fluid through said venturi to control the formation of droplets from the tip of said capillary tube.

10. The method of claim 8 further comprising:

controlling the flow of liquid to said capillary tube.

11. A method of producing uniform spheroidal catalyst particles from a catalyst forming liquid comprising:

supplying said liquid to a capillary tube;

supplying a fluid which flows through a venturi throat in which the other end of said capillary tube is positioned;

detaching droplets of said liquid from the other end of said capillary tube by said flow of said fluid; and

hardening said droplets into uniform spheriodal catalyst particles.

12. The method of claim 11 further comprising:

controlling the flow of fluid through said venturi throat to control the detachment of said droplets from the end of said capillary tube.

13. The method of claim 11 or 12 further comprising:

controlling the flow of liquid to said capillary tube.

14. The method of any of claims 11 to 13 further comprising:

detaching droplets from a plurality of capillary tubes with the end of each tube positioned in a venturi throat; and

hardening the droplets from said capillary tubes in a common vessel.

15. The method of any of claims 11 to 14 wherein the liquid is an alumina sol.

16. The method of any of claims 11 to 15 wherein the fluid is air.

17. The method of any of claims 14 to 16 wherein the common vessel contains a hot oil bath.

5431H/0340H

FIG. 1

2 | 7

0158485

FIG. 2

DROPLET DIAMETER VS. NITROGEN FLOW

HEXADECANE
32 GAUGE CAPILLARY
○ 1 ML / HR
□ 2 ML / HR
△ 4 ML / HR
▽ 8 ML / HR

DROPLET DIAMETER (MICRONS)

NITROGEN FLOW (CC/MIN)

FIG. 3

DROPLET SPACING VS. NITROGEN FLOW

FIG.4

DROPLET SPACING VS. NITROGEN FLOW

FIG. 5

5/7

0158485

DROPLET FREQUENCY VS. NITROGEN FLOW

FIG. 6

INITIAL DROPLET VELOCITY VS. NITROGEN FLOW

HEXADECANE

32 GAUGE CAPILLARY

AVG. INITIAL DROPLET VELOCITY (M/SEC.)

NITROGEN FLOW (CC/MIN)

## FIG. 7

7/7

0158485